# EUROPÄISCHE PATENTSCHRIFT

(11) **EP 2 094 622 B1**
(45) Veröffentlichungstag und Bekanntmachung des Hinweises auf die Patenterteilung: **15.09.2010**
(21) Anmeldenummer: 07866207.9
(22) Anmeldetag: 22.11.2007
(51) Int. Cl.: C04B 35/565, C04B 35/573

(54) **VERFAHREN ZUR HERSTELLUNG EINES GEGENSTANDES ZUMINDEST TEILWEISE MIT SILIZIUMKARBIDGEFÜGE AUS EINEM ROHLING AUS EINEM KOHLENSTOFFHALTIGEN MATERIAL**
METHOD FOR PRODUCING AN OBJECT AT LEAST PARTLY WITH A SILICON CARBIDE STRUCTURE FROM A BLANK OF A CARBON-CONTAINING MATERIAL
PROCÉDÉ DE RÉALISATION D'UN OBJET AYANT AU MOINS PARTIELLEMENT UNE TEXTURE DE CARBURE DE SILICIUM, À PARTIR D'UNE ÉBAUCHE EN MATIÈRE CARBONÉE

(30) Priorität: 23.11.2006 DE 102006055469
(43) Veröffentlichungstag der Anmeldung: 02.09.2009
(73) Patentinhaber: Universität Paderborn, 33098 Paderborn (DE)
(72) Erfinder: GREULICH-WEBER, Siegmund, 33175 Bad Lippspringe (DE); FRIEDEL, Bettina, 33100 Paderborn (DE)
(74) Vertreter: Schneider, Uwe
(86) Internationale Anmeldenummer: PCT/DE2007/002119
(87) Internationale Veröffentlichungsnummer: WO 2008/061521

(56) Entgegenhaltungen:
- WO-A-82/01545
- DE-A1- 2 123 572
- DE-A1- 3 322 060

## Beschreibung

Üblicherweise werden Gegenstände aus Siliziumkarbid mittels herkömmlicher Sinterverfahren hergestellt, bei denen ein fest gemahlenes Siliziumkarbid-Pulver unter Verwendung unterschiedlicher Bindemittel bei hohen Temperaturen zusammen gebacken wird. Nachteilig an dieser Vorgehensweise ist neben den benötigten hohen Temperaturen und langen Sinterzeiten die Porosität der entstehenden Gegenstände, die einen Einsatz nur für bestimmte Anwendungen zulässt.

Aus der DE 33 22 060 A1 ist ein anderes Herstellungsverfahren für Gegenstände aus Siliziumkarbid bekannt, bei dem ein Gegenstand aus einem kohlenstoffhaltigen Material wie Graphit maß- und formgetreu hergestellt wird und anschließend mittels Diffusionsvorgängen während einer langdauernden Glühbehandlung der Kohlenstoff des Gegenstandes zumindest oberflächennah durch Siliziumkarbid ersetzt wird. Hierzu wird der Gegenstand beim Glühen in ein Granulat aus Siliziumdioxid eingepackt und beim Glühen z.B. Wasserstoffgas über das Granulat geleitet. Hierdurch soll ein Gas mit nennenswertem Siliziummonoxidanteil erzeugt werden, das dann in das kohlenstoffhaltige Material des Gegenstandes oberflächennah eindiffundieren kann und mit dem Kohlenstoff des Gegenstandes derart reagiert, dass sich in der Matrix des Gegenstandes Siliziumkarbid bildet. Hierdurch kann zumindest oberflächennah ein Austausch des Kohlenstoffs des Gegenstandes gegen Siliziumkarbid erreicht werden, wodurch eine entsprechende Verbesserung der oberflächennahen Bereiche des Gegenstandes erzielt werden können. Nachteilig an dieser Verfahrensweise ist es, dass die Erzeugung des Siliziummonoxidgases aufwendig ist und die notwendigen Mengenanteile des Siliziummonoxid in diesem Gas nur schwer einzuhalten und zu dosieren sind.

Bei einem Verfahren zur Herstellung von Gegenständen aus Siliziumkarbid gemäß der WO 82/01545 A1 werden keine massiven Bauteile, sondern nur Pulver umgewandelt. Die Atmosphäre bei der Umwandlung enthält SiO-Gas. Bei einem weiteren Verfahren zur Herstellung von Gegenständen aus Siliziumkarbid gemäß der DE 2123572 A1 werden sehr poröse Kohlenstoffe umgewandelt. Die Umwandlung findet nur an der Oberfläche statt und die Atmosphäre enthält SiO-Gas.

Aufgabe der vorliegenden Erfindung ist es daher, verbesserte Herstellungsverfahren für Gegenstände aus Siliziumkarbid anzugeben, bei denen ein Gegenstand aus kohlenstoffhaltigem Material oder einem porösen Siliziumkarbid einfach und sicher ganz oder teilweise in Siliziumkarbid umgewandelt werden kann.

Die Lösung der erfindungsgemäßen Aufgabe ergibt sich aus den kennzeichnenden Merkmalen des Anspruches 1 bzw. des Anspruches 11 in Zusammenwirken mit den Merkmalen des jeweiligen Oberbegriffes. Weitere vorteilhafte Ausgestaltungen der Erfindung ergeben sich aus den Unteransprüchen.

Die Erfindung gemäß Anspruch 1 geht aus von einem Verfahren zur Herstellung eines Gegenstandes zumindest teilweise mit Siliziumkarbidgefüge aus einem Rohling aus einem kohlenstoffhaltigen Material. Hierbei wird in erfindungsgemäßer Weise in einem ersten Schritt der Gegenstand aus dem kohlenstoffhaltigen Material im wesentlichen gemäß seiner gewünschten Endform und/oder Endmaße hergestellt, der Gegenstand aus dem kohlenstoffhaltigen Material mit einem kohlenstoffreichen Siliziumdioxid-Granulat zumindest bereichsweise umhüllt und in dieser Umhüllung in einer Schutzgasatmosphäre bei einer Glühtemperatur mindestens einmal geglüht, wobei das Siliziumdioxid-Granulat siliziumkarbidhaltiges Gas abgibt, das in den Gegenstand eindringt und das kohlenstoffhaltige Material teilweise oder ganz in Siliziumkarbid umwandelt. Der wesentliche Vorteil liegt hierbei darin, dass aus dem kohlenstoffreichen Siliziumdioxid-Granulat unmittelbar reines Siliziumkarbidgas oder siliziumkarbidhaltiges Gas mit einem hohen Siliziumkarbidanteil gebildet wird, das direkt in das kohlenstoffhaltige Material des Gegenstandes eindiffundieren und dort den Kohlenstoff ganz oder teilweise ersetzen kann. Damit wird die ursprüngliche weiche Kohlenstoffmatrix des Gegenstandes ganz oder teilweise in eine harte Siliziumkarbid-Matrix umgewandelt und der Gegenstand erhält damit partiell oder ganz die vorteilhaften Eigenschaften des Siliziumkarbid. Da mit dieser Umwandlung der Matrix keine wesentlichen Form- und Maßänderungen des Gegenstandes einher gehen, kann der Gegenstand nach der Umwandlung direkt ohne weitere Nachbearbeitungen eingesetzt werden. Der hergestellte Gegenstand entspricht dem ursprünglichen Graphit-Abbild und besteht teilweise oder auch komplett aus hartem polykristallinem porösen Siliziumkarbid. Das Verfahren ist maßhaltig und hochskalierbar auf industriellen Maßstab. Es handelt sich somit um ein kostengünstiges Verfahren, Teile beliebiger Form aus Siliziumkarbid herzustellen. Zur Fertigung eines bestimmten Siliziumkarbid-Körpers wird zunächst der Gegenstand als Abbild der gewünschten Form z.B. aus den kohlenstoffhaltigen Material wie Graphit erstellt. Die Kohlenstoff-Modifikation Graphit ist aufgrund ihrer sehr geringen Härte sehr einfach zu bearbeiten, daher ist kein großer Aufwand nötig (das Verfahren ist auch für andere kohlenstoffhaltige Materialien wie etwa Glas-Kohle geeignet, diese ist jedoch härter als Graphit). Für die Umwandlung einer Graphitvorlage in Siliziumkarbid benötigt man ein spezielles kohlenstoffreiches SiO₂-Granulat. Das umzuwandelnde Graphit-Formteil wird zusammen mit diesem Granulat für wenige Stunden erhitzt, wobei der Kohlenstoff des Gegenstandes langsam in Siliziumkarbid umgewandelt wird. Eine solch preiswertes und einfaches Herstellungsverfahren (relativ niedrige Herstellungstemperatur, geringe Kosten für die Ausgangsmaterialien, kein Hochdruck notwendig, keine aufwändige Bearbeitung des Gegenstandes nach der Siliziumkarbidbildung,...) ist für diverse Anwendungsgebiete von hohem Interesse, von der Halbleiterindustrie über medizinische Anwendungen bis hin zum Turbinenbau. Spezielle Anwendungen wären z.B. der Bau von Kühlkörpern für Hochleistungs-LEDs (Ausnutzen der guten thermischen Leitfähigkeit des Siliziumkarbid), Katalysatoren und Filtern (Porosität, Dotierbarkeit, chemische, thermische und mechanische Beständigkeit), Knochen- bzw. GelenkProthesen (Ausnutzen der hohen Härte und guten Kompatibilität zu Human-Gewebe) sowie etwa feuerfesten Hochtemperatur-Gießformen.

Von besonderer Bedeutung ist es, dass der Kohlenstoff in dem kohlenstoffreichen Siliziumdioxid-Granulat derart fein verteilt vorliegt, dass beim Erhitzen des Granulates das Siliziumdioxid unmittelbar mit diesem Kohlenstoff reagiert und dabei ein siliziumkarbidhaltiges Gas, vorzugsweise weitgehend reines Siliziumkarbid-Gas bildet. Durch die Verteilung des Kohlenstoffs in dem Siliziumdioxid kann erreicht werden, dass die Bildung des siliziumkarbidhaltigen Gases weit unter der normalen Sublimationstemperatur des Siliziumkarbid, insbesondere schon bei Temperaturen zwischen 1700°C und 1900°C erfolgt und damit in beschriebener Weise direkt Siliziumkarbidgas zum eindiffundieren in den Gegenstand zur Verfügung gestellt wird. In weiterer Ausgestaltung ist es hierbei von Vorteil, wenn das siliziumkarbidhaltige Gas gasförmig in den Gegenstand aus dem kohlenstoffhaltigen Material eindringt und den Kohlenstoff des Gegenstandes aus der Kohlenstoffmatrix verdrängt. Dadurch wird unter weitgehendem Erhalt der Struktur der Matrix der Hauptbestandteil der Matrix von Kohlenstoff in Siliziumkarbid ausgetauscht und die Eigenschaften des Gegenstandes in der schon beschriebenen Weise geändert und verbessert. Hierbei kann in weiterer Ausgestaltung das siliziumkarbidhaltige Gas direkt mit dem Gefüge des kohlenstoffhaltigen Materials reagieren und sich anstelle des Kohlenstoffs in dem kohlenstoffhaltigen Material als Siliziumkarbid, vorzugsweise in die Modifikation 3C des Siliziumkarbid in die Matrix des kohlenstoffhaltigen Materials einlagern. Je nach späterem Verwendungszweck des Gegenstandes kann die gewünschte Modifikation des Siliziumkarbid verändert werden.

Von Vorteil ist es weiterhin, dass die Glühtemperatur des Gegenstandes in der Umhüllung aus Siliziumdioxid-Granulat nur zwischen 1700 °C und 2300 °C, vorzugsweise 1800 °C betragen kann, um die beschriebene Bildung des siliziumkarbidhaltigen Gases auszulösen und die entsprechenden Diffusionsvorgänge ablaufen zu lassen. Hierdurch sind keine Glühtemperaturen weit oberhalb von 2000 °C wie typischerweise von 2700 °C und mehr erforderlich, die zum einen den Vorgang wesentlich besser steuerbar machen und zum anderen weit weniger Energie verbrauchen.

In weiterer Ausgestaltung ist es denkbar, dass der Gegenstand anschließend an das Glühen und nach Entfernen des Siliziumdioxid-Granulats zur Entfernung von restlichen Kohlenstoffanteilen unter Umgebungsatmosphäre bei einer Nachbehandlungstemperatur nachbehandelt wird, wobei die die Nachbehandlungstemperatur des Gegenstandes oberhalb der Karbonisierungstemperatur von mindestens 350 °C liegt und vorzugsweise 1000 °C betragen muss. Hierdurch können eventuell in der Matrix des Gegenstandes nach dem Glühen verbliebene Kohlenstoffreste entfernt werden, die z.B. die mechanischen oder elektrischen Eigenschaften des Gegenstandes beeinträchtigen könnten. Auch ist bei den genannten Temperaturen und wegen der Nachbehandlung unter normaler Atmosphäre diese Nachbehandlung einfach durchführbar.

Weiterhin ist es denkbar, dass der Glühvorgang in der Hülle aus Siliziumdioxid-Granulat mehrfach, insbesondere mehr als drei Mal jeweils unter zumindest teilweisem Austausch und/oder Erneuerung des Siliziumdioxid-Granulats wiederholt wird. Durch die Bildung des siliziumkarbidhaltigen Gases kann aufgrund des Verbrauchs des Kohlenstoffes in dem Granulat durch einen Austausch des Granulats und mehrfache Glühung dafür gesorgt werden, dass immer genug siliziumkarbidhaltiges Gas gebildet wird und damit der Austausch des Kohlenstoffs in dem Gegenstand durch Siliziumkarbid zügig ablaufen kann. Der Gegenstand wird zusammen mit diesem Granulat z.B. in Argonatmosphäre für wenige Stunden erhitzt, dann frisches Granulat dazugefüllt und wiederum erhitzt, dieser Vorgang wird mehrmals, vorteilhaft dreimal wiederholt, je nach Größe des Gegenstandes. Abschließend kann das Formteil an Luft erhitzt werden, um Kohlenstoffreste wegzubrennen. Hierbei ist es denkbar, dass die Dauer des Glühvorganges und die Häufigkeit der Auswechslung des Siliziumdioxid-Granulats die Eindringtiefe der Siliziumkarbidbildung in dem Gegenstand beeinflusst. Damit kann insbesondere bei nur oberflächennahem oder partiellem Ersetzen der Kohlenstoffmatrix des Gegenstandes der Grad der Bildung von Siliziumkarbid gut gesteuert und den jeweiligen späteren Anwendungen des Gegenstandes angepasst werden.

Von besonderem Vorteil ist es, wenn der Gegenstand aus dem kohlenstoffhaltigen Material aus Graphit, Glaskohle oder dgl. hergestellt wird, da bei solchen Werkstoffen der Gegenstand aus dem kohlenstoffhaltigen Material mechanisch einfach bearbeitet werden kann, um die endmaßhaltige Gestalt des Gegenstandes herzustellen. Es ist dabei aber durchaus auch denkbar, den Gegenstand aus anderen kohlenstoffhaltigen Materialien herzustellen, die hier nicht explizit angegeben sind.

In weiterer Ausgestaltung ist es denkbar, dass der Gegenstand nach der Behandlung zumindest bereichsweise ein Gefüge aus polykristallinem porösen Siliziumkarbid aufweist. Hierdurch können etwa lokal hoch belastete Teile des Gegenstandes nur abschnittsweise dort beschichtet werden, wo die Belastung mit dem Gegenstand wechselwirkt und dort eine Verbesserung der Materialeigenschaften des Gegenstandes herbeiführen. Insbesondere für mechanisch hoch belastetet Gegenstände ist es aber sinnvoll, wenn der Gegenstand nach der Behandlung komplett ein Gefüge aus polykristallinem porösen Siliziumkarbid aufweist, da dann der Gegenstand als ganzer mechanisch hoch belastbar ist.

Von wesentlichem Vorteil für die Durchführung des Verfahrens ist es, wenn das kohlenstoffreiche Siliziumdioxid-Granulat in einem Sol-Gel-Prozess mit anschließender karbothermaler Reduktion hergestellt wird. Durch die Verwendung eines Sol-Gel-Prozesses zur Herstellung des kohlenstoffreichen Siliziumdioxid-Granulates kann die Verteilung des Kohlenstoffs oder auch anderer hinzuzufügender Stoffe des Granulats sehr genau und sehr fein, quasi auf atomarer Basis eingestellt werden, wodurch sich die Bildung des siliziumkarbidhaltigen Gases verbessert oder auch erst in größerem Maßstab ermöglicht wird. Durch die mittels Sol-Gel-Prozess erreichbare feine Verteilung des Kohlenstoffs und der anderen hinzuzufügenden Stoffe des Granulats kann beim Glühvorgang das sich bildende siliziumoxidhaltige Gas unmittelbar mit dem Kohlenstoff und den anderen hinzuzufügenden Stoffe reagieren und steht sofort für die Diffusionsvorgänge oberflächennah an dem Gegenstand zur Verfügung. Damit kann insbesondere auch die sonst notwendige externe Erzeugung eines siliziumoxidhaltigen Gases entfallen.

Von Vorteil ist es, wenn der Sol-Gel-Prozess zur Herstellung des kohlenstoffreichen Siliziumdioxid-Granulats als Ausgangsprodukt ein lösliches hydrolysierbares anorganisches oder organisches Silikat verwendet. Hiermit sind eine große Anzahl denkbarer Ausgangssubstanzen umfasst, die als Siliziumlieferant zur Bildung des Granulates zur Verfügung stehen und günstig im Sol-Gel-Prozess verwendet werden können. Die nachfolgend ausdrücklich angegebenen Substanzen stellen hierbei nur besonders bevorzugte Vertreter der vorstehend genannten Stoffklassen dar und können nicht als abschließende Aufzählung zu verwendender Stoffe angesehen werden.

Bei den anorganischen Silikaten können insbesondere wasserlösliche Alkalisilikate wie Wasserglas oder dgl. oder auch wasserlösliche Siliziumwasserstoff-Verbindungen wie Silane als Ausgangsstoffe für den Sol-Gel-Prozess verwendet werden, wobei die Synthese jeweils etwas angepasst werden müsste, d.h. Lösungsmittel, Katalysator, Temperatur und Zeit müssen ggf. angepasst werden (verwendet man beispielsweise das unten genannte organische Silikat Tetraisopropoxysilan, würde man wegen der "Molekülverwandtschaft" Isopropanol als Lösungsmittel verwenden).

Nach IUPAC-Nomenklatur sind Silane Sitiziumwasserstoff-Verbindungen, wobei der Begriff oft falsch als Oberbegriff für andere Silizium-Verbindungen verwendet wird, z.T. auch für die Alkoxide, so dass es oft Verwirrung gibt. Die Bezeichnung "silan" z.B. im engl. Wort für TEOS "Tetraethoxysilan" darf nur im Formelnamen in einem Wort mit den weiteren angehängten organischen oder anorganischen Gruppen geführt werden ("silanes: saturated silicon hydrides, analogues of the alkanes; i.e. compounds of the general formula SinH2n+2. Silanes may be subdivided into silane, oligosilanes and polysilanes. Note: hydrocarbyl derivatives and other derivatives are often referred to loosely as silanes". 1995, 67, 1365, IUPAC Compendium of Chemical Terminology 2nd Edition (1997)).

Bei den organischen Silikaten können Siliziumacetate, Siliziummercaptate oder Siliziumalkoxide, besonders bevorzugt auch Tetraethylorthosilikat (TEOS) verwendet werden. Letztere lassen sich in die Stoffgruppe mit der chemischen Kurzformel. Si(OR)ₙ eingruppieren, zu letzterem gehört auch das TEOS. Das Synthetisieren dieser Silizium-Alkoxide ist ein eigener Forschungszweig, daher kommen immer neue Silizium-Alkoxide dazu, die beliebig komplex aussehen können. Sie unterscheiden sich meist in ihrer Art und Geschwindigkeit der Reaktionen. Alle diese Silizium-Alkoxide sollen im Rahmen dieser Erfindung mit umfasst sein. Silizium-Alkoxide gehören zu den Metall-organischen Verbindungen und sind einfach gesagt eine Verbindung aus einem Siliziumatom ("Si"), an dem zunächst mindestens ein Sauerstoffatom ("O") gebunden ist, an dem wiederum eine organische Gruppe hängt ("R"). Derzeit gibt es allein über 800 verschiedene Silizium-Alkoxide frei am Markt zu kaufen. Die günstigsten und gebräuchlichsten der Form Si(OR)₄ mit R=alkyl-Gruppe sind
- Tetraethoxysilan (oder auch TEOS)
- Tetramethoxysilan (oder auch TMOS - Tetramethylorthosilikat)
- Tetraisopropoxysilan
- Tetra-n-Butoxysilan

Von Vorteil ist es weiter, wenn das organische oder anorganische Silikat in einem chemisch passenden Lösungsmittel aufgelöst und mindestens eine weitere Substanz als Additiv hinzugefügt wird, die sich molekular mit dem Silikat innerhalb des Sols mischt. Durch die Eigenschaften des Additivs kann insbesondere die Bildung des Siliziumkarbidgases vorteilhaft beeinflusst werden.

In weiterer Ausgestaltung ist es denkbar, dass als Additiv Salze oder andere Verbindungen benutzt werden, die einzubringende Atome eines chemischen Elementes aufweisen, insbesondere als Atome eines chemischen Elementes Stickstoff N, Aluminium Al, Bor B, Phosphor P oder Erbium Er oder diese Stoffe enthaltende Verbindungen als Additiv dem Sol beigegeben werden. Es eigenen sich hauptsächlich Salze oder andere Verbindungen der einzubringenden Atome. Die Verbindungen müssen insbesondere ein paar Anforderungen erfüllen, um eine homogene Verteilung im Granulat zu erreichen, sie
- sollten nur ein in Frage kommendes Dotier-Atom enthalten,
- sollten gute bis mäßige Löslichkeit in Wasser oder Ethanol haben (Ausnahme: wenn der Stoff sich, in Verbindung mit einer der an der Reaktion beteiligten Substanzen, zu etwas Löslichem zersetzt),
- dürfen nicht zu reaktiv sein in Verbindung mit den sonstigen für die Herstellung eingesetzten Substanzen, um den Sol-Gel-Prozeß nicht zu stören (Hydrolyse, Kondensation und Gelation müssen ungestört ablaufen können),
- dürfen sich nicht während des Sol-Gel-Prozesses in etwas nicht-lösliches zersetzen oder umwandeln,
- dürfen nicht (zu schnell) oxidieren,
- dürfen nicht unter 1000°C flüchtig sein (also nicht verdampfen),
- dürfen nicht während des Sol-Gel-Prozesses oder der Wärmebehandlung (also z.B. bis 1700°C) in eine Verbindung zerfallen oder sich eine Substanz umwandeln, die erst bei über 1800°C verdampft.

Erfüllen können dieser Forderungen u.a. folgende Substanzen, die in Form einer nicht abschließenden Aufzählung weiterer denkbarer Substanzen genannt werden, die die oben genannten Anforderungen erfüllen können:

| **Dotierung** | **Verbindungen** |
|---|---|
| Erbium (Er) | Erbiumchlorid |
| | Erbium elementar (s.o. → löst sich nur in Verbindung mit HCl) |
| Stickstoff (N) | Ammoniumchlorid |
| | Kaliumnitrat |
| | Salpetersäure |
| | Melamin, Harnstoff |
| Phosphor (P) | Kaliumdihydrogenphosphat |
| | di-Natrium-hydrogenphosphat |
| | Phosphorsäure (allerdings ziemlich gefährlich) |
| Aluminium (Al) | Aluminiumchlorid |
| | Aluminium elementar (s.o. → löst sich nur in Verbindung mit HCl) |
| Bor (B) | di-Natriumtetraborat |

Allgemein sucht man Verbindungen, auf die die oben genannten Anforderungen zutreffen, unter anderem in den Gruppen der Acetate, Acetylacetonate, Chloride, Nitrate, Sulfate, Phosphate (nur für P), Borate (nur für B), Amino-Verbindungen (nur für N) oder Säuren aber auch lösliche hydrolysierbare Verbindungen, die das Dotier-Atom tragen, also z.B. organische, wie Alkoxide des Dotieratoms (z.B. Borethoxid für Bor, Aluminiumethoxid für Aluminium) oder anorganische, wie Aluminiumsilikat (Kaolin).

Weiterhin ist es von Vorteil, dass bei Verwendung von Salpetersäure als Dotierungsmaterial für Stickstoff N die Aufnahme des siliziumhaltigen Gases in die Matrix des kohlenstoffhaltigen Materials des Gegenstandes verbessert wird. Dies basiert darauf, dass die Salpetersäure den Kohlenstoff des Gegenstandes zumindest oberflächlich anlösen kann und daher eine verbesserte Diffusion des siliziumkarbidhaltigen Gases in das Innere des Gegenstandes hervorgerufen wird.

In einer besonders bevorzugten Kombination der Ausgangsstoffe ist es für den Sol-Gel-Prozess denkbar, dass das Siliziumdioxid-Granulat unter Einsatz von Tetraethylorthosilikat, Ethanol als Lösungsmittel, Salzsäure als Katalysator und Saccharose als Dotierungsmaterial hergestellt wird. Hierbei kann auch anstelle von Saccharose jeder in Ethanol oder Wasser ähnlich hoch-kohlenstoffreiche lösliche organische Stoff verwendet werden.

Weiterhin ist es von Vorteil, wenn das Siliziumdioxid-Granulat nach der Gelbildung mittels einer karbothermalen Reduktion nachbehandelt und anschließend gepulvert wird. Dadurch lässt sich eine auch physikalische feine Verteilung des Granulates mit einer großen Reaktionsoberfläche zur Bildung der siliziumhaltigen Gase erreichen.

Weiterhin ist von Vorteil, dass der Glühvorgang unter Schutzgasatmosphäre unter Normaldruck ausgeführt wird. Hierdurch erübrigt sich die sonst häufig notwendige Erzeugung hoher Drücke mit dem dafür notwendigen apparativen Aufwand und den damit einhergehenden Kosten. Weiter ist es lediglich erforderlich, dass der Glühvorgang über mehrere Stunden ausgeführt wird und damit schon mittels relativ kurzer Behandlungszeiten eine weitgehende oder vollständige Umwandlung des Kohlenstoffs des Gegenstandes in Siliziumkarbid erreicht werden kann.

Ebenfalls kann ein Vorteil darin gesehen werden, dass die Nachbehandlung unter Sauerstoff zwischen 5 und 15 Stunden, vorzugsweise 10 Stunden dauert und damit ebenfalls relativ geringe Nachbehandlungszeiten und keine Notwendigkeit besonderer atmosphärischer Bedingungen erfordert.

Die Erfindung gemäß Anspruch 11 betrifft ein Verfahren zur Herstellung eines Gegenstandes zumindest teilweise mit Siliziumkarbidgefüge aus einem Rohling aus einem kohlenstoffhaltigen Material oder einem porösen Siliziumkarbid. Hierbei wird in einem ersten Schritt der Gegenstand im wesentlichen gemäß seiner gewünschten Endform und/oder Endmaße hergestellt und anschließend mit einem Silizium und Kohlenstoff enthaltenden Precursor-Sol infiltriert und in einer Schutzgasatmosphäre bei einer Glühtemperatur zur Durchführung einer karbothermalen Reduktion mindestens einmal geglüht, wobei das infiltrierte Precursor-Sol entweder siliziumkarbidhaltiges Gas abgibt, das das Material des Gegenstandes teilweise oder ganz in Siliziumkarbid umwandelt oder z.B. durch Diffusionsvorgänge zwischen Precursor-Sol und Material das Material des Gegenstandes direkt umgewandelt wird. Durch die Infiltration des Precursor-Sols, das vorteilhaft mit dem Sol identisch oder zu diesem ähnlich ist, das wie vorstehend beschrieben zur Herstellung des Siliziumdioxid-Granulats verwendet wird, dringt die Siliziumkarbid abgebende Substanz tief in das Innere des Gegenstandes ein und kann bei der anschliessenden Glühung in einer Schutzgasatmosphäre bei einer Glühtemperatur zur Durchführung einer karbothermalen Reduktion die Siliziumkarbidbildung und damit die Umwandlung des Gefüges des Gegenstandes gezielter und effektiver ausführen als bei einer reinen Umhüllung des Gegenstandes mittels des vorstehend beschriebenen Granulats. Als Infiltrationsverfahren können dabei z.B. übliche Vakuum- und/oder Druckinfiltrationsverfahren verwendet werden.

Es ist hierbei zu betonen, dass viele der vorstehend zum Verfahren nach Anspruch 1 beschriebenen Merkmale, Eigenschaften und Details, die insbesondere in den Unteransprüchen noch einmal genauer spezifiziert sind, auch für das Verfahren mittels Infiltration des Precursor-Sols zutreffen und dort Verwendung finden können. So sind insbesondere die Zusammensetzung des Precursor-Sols identisch oder ähnlich zu derjenigen des Siliziumdioxid-Granulats, die Behandlungsabläufe und -bedingungen des Gegenstandes beim Glühen sowie die Glühtemperaturen lassen sich hierbei ebenfalls anwenden. So kann insbesondere der Gegenstand bei einer Glühtemperatur zur Durchführung einer karbothermalen Reduktion von im wesentlichen 1800 °C geglüht werden. Nur aus Gründen der Vermeidung von Wiederholungen werden die vorstehend zum Verfahren nach Anspruch 1 beschriebenen Merkmale, Eigenschaften und Details hier nicht noch einmal detailliert angegeben, gleichwohl aber in vollem Umfang zum Gegenstand der Erfindung gemäß Anspruch 32 gemacht.

Von Vorteil ist es weiterhin, wenn der Gegenstand nach der Infiltration des Precursor-Sols bei einer Temperatur von im wesentlichen 1000 °C vorgesintert wird. Die Vorsinterung sorgt dabei dafür, dass das Precursor-Sol in das Gefüge des Gegenstandes soweit eingelagert und stabilisiert wird, dass bei vorzugsweise nachfolgenden weiteren Infiltrationsschritten das schon infiltrierte Precursor-Sol innerhalb des Gefüges verbleibt und um weiteres Precursor-Sol angereichert werden kann. Hierdurch kann durch mehrere Infiltrationsschritte jeweils mit zwischengeschalteter Vorsinterung die Eindringtiefe und die Konzentration des Precursor-Sols verändert und dann mit der endgültigen Glühung bei einer Glühtemperatur zur Durchführung einer karbothermalen Reduktion die Umwandlung in Siliziumkarbid ausgelöst werden. Bei der Vorsinterung selbst finden noch keine Prozesse einer karbothermalen Reduktion statt. Mit der Vorsinterung kann dabei beliebig oft infiltriert werden, bis die gewünschte Verteilung des Precursor-Sols in dem Gefüge des Gegenstandes erreicht ist. Abschließend wird dann der Gegenstand wie schon beschrieben der karbothermalen Reduktion unterworfen.

Es ist aber auch denkbar, dass der Gegenstand nach der Infiltration des Precursor-Sols mit Gel behandelt und getrocknet wird. Diese Behandlung ist langwieriger und aufwendiger, führt jedoch auch zu einem mit Siliziumkarbid-abgebender Substanz gefüllten Gefüge des Gegenstandes. Auch hier folgt dann wie schon beschrieben die Glühung bei einer Glühtemperatur zur Durchführung einer karbothermalen Reduktion.

Eine weitere Verbesserung der Beeinflussung der Infiltration des Gegenstandes lässt sich dadurch erreichen, dass das Precursor-Sol vor der Infiltration, vorzugsweise mit Ethanol, verdünnt und damit die Viskosität des Precursor-Sols verringert wird. Hierdurch kann das verdünnte Precursor-Sol tiefer in das Gefüge des Gegenstandes eindringen und die Siliziumkarbid-abgebende Substanz sich gezielter in dem Inneren des Gegenstandes einlagern. Hierbei wird insbesondere über die Verdünnung des Precursor-Sols und die damit einhergehende Veränderung des Siliziumanteils, der in den Gegenstand infiltriert wird, die Dichte und/oder die Porengröße des infiltrierten Materials nach dem Glühen bei einer Glühtemperatur eingestellt. Da das Precursor-Sol dann auch weniger Precursormaterial pro Volumen Flüssigkeit enthält, wird auch weniger Substanz in den Poren des infiltrierten Materials abgelagert, dies ermöglicht die Steuerung der endgültigen effektiven Dichte/Porengröße des infiltrierten Materials (nach der karbothermischen Reduktion) über die Verdünnung des Precursor-Sols.

Denkbar ist es weiterhin, dass der Gegenstand aus dem kohlenstoffhaltigen Material mittels Einbettung in ein kohlenstoffreiches Siliziumdioxid-Granulat zumindest teilweise in ein Siliziumkarbidgefüge umgewandelt und anschließend mit dem Precursor-Sol infiltriert wird. Es ist dabei denkbar, ein Kohlenstoffobjekt nur soweit mit dem Granulatverfahren gemäß Anspruch 1 in Siliziumkarbid umzuwandeln, bis sich in dem Körper ein genügend stabiles Siliziumkarbid-Grundgerüst ausgebildet hat. Aus diesem könnte dann der verbliebene Kohlenstoff (in oxidierender Atmosphäre) ausgebrannt werden und die Struktur mittels des Infiltrationsverfahrens gemäß Anspruch 32 nach und nach verdichtet werden.

Die Erfindung betrifft ebenfalls einen Gegenstand, hergestellt nach dem Verfahren gemäß Anspruch 1 oder hergestellt nach dem Verfahren gemäß Anspruch 11. Derartige mit dem erfindungsgemäßen Verfahren hergestellte Gegenstände können sehr unterschiedliche Zwecke erfüllen, von denen einige hier beispielhaft genannt seien:
- Kühlkörper vom Millimeter bis Meterbereich,
- mechanisch und thermisch sehr stark beanspruchte Bauteile (z.B. Bohrköpfe, Flugzeug-Turbinen, Bremsscheiben, Hitzeschutzkacheln in der Raumfahrt, Auskleidung von Hochöfen),
- feuerfeste Hochtemperatur-Gießformen,
- Filtermaterial für aggressive Medien (z.B. belastete Abwässer oder für ätzende Chemikalien),
- Filterung in Hochtemperaturumgebung (z.B. als Feinstaubfilter und Katalysatorträger),
- Kühlelemente oder Wärmetauscher (z.B. in Kernkraftwerken),
- Anwendungen in der Medizin (künstliche Knochen- und Gelenkprothesen - Maßanfertigungen),
- Halbleiteranwendungen (Photovoltaik, LEDs, Sensorik, als Trägermaterial, dotierbar bei Herstellung),
- Keramikanwendungen in Spezialgebieten (Medizin, Halbleiterindustrie, Luft- und Raumfahrt).

## Patentansprüche

1. Verfahren zur Herstellung eines Gegenstandes zumindest teilweise mit Siliziumkarbidgefüge aus einem Rohling aus einem kohlenstoffhaltigen Material,
wobei in einem ersten Schritt der Gegenstand aus dem kohlenstoffhaltigen Material im wesentlichen gemäß seiner gewünschten Endform und/oder Endmaße hergestellt wird, und anschließend
der Gegenstand aus dem kohlenstoffhaltigen Material mit einem kohlenstoffreichen Siliziumdioxid-Granulat zumindest bereichsweise umhüllt und in dieser Umhüllung in einer Schutzgasatmosphäre bei einer Glühtemperatur mindestens einmal geglüht wird, wobei das Siliziumdioxid-Granulat siliziumkarbidhaltiges Gas abgibt, das in den Gegenstand eindringt und das kohlenstoffhaltige Material teilweise oder ganz in Siliziumkarbid umwandelt.

2. Verfahren gemäß Anspruch 1, **dadurch gekennzeichnet, dass** der Kohlenstoff in dem kohlenstoffreichen Siliziumdioxid-Granulat derart fein verteilt vorliegt, dass beim Erhitzen des Granulates das Siliziumdioxid mit diesem Kohlenstoff reagiert und ein siliziumkarbidhaltiges Gas, vorzugsweise weitgehend reines Siliziumkarbid-Gas bildet.

3. Verfahren gemäß Anspruch 2, **dadurch gekennzeichnet, dass** die Bildung des siliziumkarbidhaltigen Gases durch die Verteilung in dem Siliziumdioxid weit unter der normalen Sublimationstemperatur des Siliziumkarbid, insbesondere bei Temperaturen zwischen 1700°C und 1900°C erfolgt.

4. Verfahren gemäß einem der vorstehenden Ansprüche, **dadurch gekennzeichnet, dass** das siliziumkarbidhaltige Gas gasförmig in den Gegenstand aus dem kohlenstoffhaltigen Material eindringt und den Kohlenstoff des Gegenstandes verdrängt.

5. Verfahren gemäß einem der vorstehenden Ansprüche, **dadurch gekennzeichnet, dass** der Gegenstand aus dem kohlenstoffhaltigen Material aus Graphit, Glaskohle oder dgl. hergestellt wird.

6. Verfahren gemäß einem der vorstehenden Ansprüche, **dadurch gekennzeichnet, dass** der Gegenstand nach der Behandlung zumindest bereichsweise, vorzugsweise komplett ein Gefüge aus polykristallinem porösen Siliziumkarbid aufweist.

7. Verfahren gemäß einem der vorstehenden Ansprüche, **dadurch gekennzeichnet, dass** das kohlenstoffreiche Siliziumdioxid-Granulat in einem Sol-Gel-Prozess mit anschließender karbothermaler Reduktion hergestellt wird.

8. Verfahren gemäß Anspruch 7, **dadurch gekennzeichnet, dass** der Sol-Gel-Prozess zur Herstellung des kohlenstoffreichen Siliziumdioxid-Granulats als Ausgangsprodukt ein lösliches hydrolysierbares anorganisches oder organisches Silikat verwendet.

9. Verfahren gemäß Anspruch 8, **dadurch gekennzeichnet, dass** das organische oder anorganische Silikat in einem chemisch passenden Lösungsmittel aufgelöst und mindestens eine weitere Substanz, vorzugsweise Salze oder andere Verbindungen mit einzubringenden Atomen eines chemischen Elementes, als Additiv hinzugefügt wird, die sich molekular mit dem Silikat innerhalb des Sols mischt.

10. Verfahren gemäß einem der vorstehenden Ansprüche, **dadurch gekennzeichnet, dass** das Siliziumdioxid-Granulat unter Einsatz von Tetraethylorthosilikat, Ethanol als Lösungsmittel, Salzsäure als Katalysator und Saccharose als Dotierungsmaterial hergestellt wird.

11. Verfahren zur Herstellung eines Gegenstandes zumindest teilweise mit Siliziumkarbidgefüge aus einem Rohling aus einem kohlenstoffhaltigen Material oder einem porösen Siliziumkarbid,
wobei in einem ersten Schritt der Gegenstand im wesentlichen gemäß seiner gewünschten Endform und/oder Endmaße hergestellt wird, und anschließend der Gegenstand mit einem Silizium und Kohlenstoff enthaltenden Precursor-Sol infiltriert und in einer Schutzgasatmosphäre bei einer Glühtemperatur zur Durchführung einer karbothermalen Reduktion mindestens einmal geglüht wird, wobei durch das infiltrierte Precursor-Sol das Material des Gegenstandes teilweise oder ganz in Siliziumkarbid umwandelt wird.

12. Verfahren gemäß Anspruch 11, **dadurch gekennzeichnet, dass** der Gegenstand nach der Infiltration des Precursor-Sols bei einer Temperatur von im wesentlichen 1000 °C vorgesintert wird.

13. Verfahren gemäß Anspruch 12, **dadurch gekennzeichnet, dass** nach einer ersten Infiltration und einer ersten Vorsinterung des infiltrierten Gegenstandes der Gegenstand nochmals ein- oder mehrmalig infiltriert wird, wobei der Gegenstand vorzugsweise nach jeder Infiltration vorgesintert wird.

14. Verfahren gemäß einem der vorstehenden Ansprüche, **dadurch gekennzeichnet, dass** der Gegenstand aus dem kohlenstoffhaltigen Material mittels Einbettung in ein kohlenstoffreiches Siliziumdioxid-Granulat zumindest teilweise in ein Siliziumkarbidgefüge umgewandelt und anschließend mit dem Precursor-Sol infiltriert wird.

15. Gegenstand, hergestellt nach dem Verfahren gemäß Anspruch 1 oder hergestellt nach dem Verfahren gemäß Anspruch 11.

## Claims

1. A process for the production of an article at least partially with a silicon carbide structure from a blank comprising a carbonaceous material, wherein in a first step the article of the carbonaceous material is produced substantially in accordance with its desired final shape and/or final dimension, and then
the article of the carbonaceous material is at least region-wise enclosed with a carbon-rich silicon dioxide granulate and fired at least once in said enclosure in a protective gas atmosphere at a firing temperature, in which case the silicon dioxide granulate gives off silicon carbide-bearing gas which penetrates into the article and partially or entirely converts the carbonaceous material into silicon carbide.

2. A process according to claim 1 **characterised in that** the carbon is present in finely distributed form in the carbon-rich silicon dioxide granulate in such a way that when the granulate is heated the silicon dioxide reacts with said carbon and forms a silicon carbide-bearing gas, preferably substantially pure silicon carbide gas.

3. A process according to claim 2 **characterised in that** formation of the silicon carbide-bearing gas is effected by distribution in the silicon dioxide far below the normal sublimation temperature of the silicon carbide, in particular at temperatures between 1700°C and 1900°C.

4. A process according to one of the preceding claims **characterised in that** the silicon carbide-bearing gas penetrates in gas form into the article of the carbonaceous material and displaces the carbon of the article.

5. A process according to one of the preceding claims **characterised in that** the article of the carbonaceous material is produced from graphite, glassy carbon or the like.

6. A process according to one of the preceding claims **characterised in that** the article after the treatment has at least region-wise and preferably completely a structure of polycrystalline porous silicon carbide.

7. A process according to one of the preceding claims **characterised in that** the carbon-rich silicon dioxide granulate is produced in a sol-gel process with subsequent carbothermal reduction.

8. A process according to claim 7 **characterised in that** the sol-gel process for production of the carbon-rich silicon dioxide granulate as its starting product uses a soluble hydrolysable inorganic or organic silicate.

9. A process according to claim 8 **characterised in that** the organic or inorganic silicate is dissolved in a chemically suitable solvent and at least one further substance, preferably salts or other compounds with atoms to be introduced of a chemical element is added as an additive which molecularly mixes with the silicate within the sol.

10. A process according to one of the preceding claims **characterised in that** the silicon dioxide granulate is produced using tetraethylorthosilicate, ethanol as a solvent, hydrochloric acid as a catalyst and saccharose as a dopant.

11. A process for the production of an article at least partially with a silicon carbon structure from a blank comprising a carbonaceous material or a porous silicon carbide,
wherein in a first step the article is produced substantially in accordance with its desired final shape and/or final dimension, and then
the article is infiltrated with a precursor sol containing silicon and carbon and fired at least once in a protective gas atmosphere at a firing temperature to perform a carbothermal reduction, wherein the material of the article is partially or entirely converted into silicon carbide by the infiltrated precursor sol.

12. A process according to claim 11 **characterised in that** the article is presintered after infiltration of the precursor sol at a temperature of substantially 1000°C.

13. A process according to claim 12 **characterised in that** after a first infiltration operation and a first presintering of the infiltrated article the article is infiltrated again one or more times, wherein the article is preferably presintered after each infiltration operation.

14. A process according to one of the preceding claims **characterised in that** the article of the carbonaceous material is at least partially converted into a silicon carbide structure by means of embedding in a carbon-rich silicon dioxide granulate and then infiltrated with the precursor sol.

15. An article produced by the process according to claim 1 or produced by the process according to claim 11.

## Revendications

1. Procédé pour la fabrication d'un objet, au moins en partie avec une structure en carbure de silicium, provenant d'une pièce brute en un matériau contenant du carbone,
dans lequel, lors d'une première étape, l'objet est fabriqué en le matériau contenant du carbone, pour l'essentiel en fonction de sa forme finale et/ou ses côtes finales désirées, et qu'ensuite
l'objet en le matériau contenant du carbone est enrobé au moins par endroits d'un granulé de dioxyde de silicium riche en carbone et est cuit au moins une fois dans cet enrobage dans une atmosphère de gaz protecteur à une température d'incandescence, le granulé de dioxyde de silicium dégageant alors un gaz contenant du carbure de silicium qui pénètre dans l'objet et qui transforme en partie ou en totalité le matériau contant du carbone en carbure de silicium.

2. Procédé selon la revendication 1, **caractérisé en ce que** le carbone se présente dans le granulé de dioxyde de silicium si finement réparti que, lors du chauffage du granulé, le dioxyde de silicium réagit au contact de ce carbone et forme un gaz contenant du carbure de silicium, de préférence du carbure de silicium gazeux pur.

3. Procédé selon la revendication 2, **caractérisé en ce que** la formation du gaz contenant du carbure de silicium s'effectue par la répartition dans le dioxyde de silicium bien en dessous de la température de sublimation normale du carbure de silicium, en particulier à des températures entre 1700 °C et 1900 °C.

4. Procédé selon l'une quelconque des revendications précédentes, **caractérisé en ce que** le gaz contenant du carbure de silicium pénètre à l'état gazeux dans l'objet en le matériau contenant du carbone et déplace le carbone de l'objet.

5. Procédé selon l'une quelconque des revendications précédentes, **caractérisé en ce que** l'objet en le matériau contenant du carbone est fabriqué en graphite, en carbone vitreux ou similaires.

6. Procédé selon l'une quelconque des revendications précédentes, **caractérisé en ce que** l'objet présente après le traitement, au moins partiellement, de préférence complètement, une texture de carbure de silicium polycristallin poreux.

7. Procédé selon l'une quelconque des revendications précédentes, **caractérisé en ce que** le granulé de dioxyde de silicium riche en carbone est fabriqué au cours d'un processus sol-gel suivi d'une réduction carbothermique.

8. Procédé selon la revendication 7, **caractérisé en ce que** le processus sol-gel pour la fabrication du granulé de dioxyde de silicium riche en carbone utilise comme produit de départ un silicate soluble hydrolysable inorganique ou organique.

9. Procédé selon la revendication 8, **caractérisé en ce que** le silicate organique ou inorganique est dissout dans un solvant chimiquement approprié et **en ce qu'**au moins une autre substance, de préférence des sels ou d'autres composés avec des atomes à introduire d'un élément chimique, est ajoutée comme additif, substance qui se mélange moléculairement avec le silicate à l'intérieur du sol.

10. Procédé selon l'une quelconque des revendications précédentes, **caractérisé en ce que** le granulé de dioxyde de silicium est fabriqué moyennant l'utilisation d'orthosilicate de tétraéthyle, d'éthanol comme solvant, d'acide chlorhydrique comme catalyseur et de saccharose comme matériau de dopage.

11. Procédé de fabrication d'un objet, au moins en partie avec une structure de carbure de silicium provenant d'une pièce brute en un matériau contenant du carbone ou en un carbure de silicium poreux,
dans lequel, lors d'une première étape, l'objet est fabriqué pour l'essentiel en fonction de sa forme finale et/ou à ses cotes finales désirées, et ensuite
l'objet est infiltré d'un sol précurseur contenant du silicium et du carbone et est cuit au moins une fois dans une atmosphère de gaz de protection à une température d'incandescence pour l'exécution d'une réduction carbothermique, par le sol précurseur infiltré, le matériau de l'objet étant alors transformé partiellement ou totalement en carbure de silicium.

12. Procédé selon la revendication 11, **caractérisé en ce qu'**après l'infiltration du sol précurseur, l'objet est pré-fritté à une température de sensiblement 1000 °C.

13. Procédé selon la revendication 12, **caractérisé en ce qu'**après une première infiltration et un premier pré-frittage de l'objet infiltré, l'objet est encore infiltré une ou plusieurs fois, sachant que, de préférence, l'objet est pré-fritté après chaque infiltration.

14. Procédé selon l'une quelconque des revendications précédentes, **caractérisé en ce que** par introduction dans un lit de dioxyde de silicium riche en carbone, l'objet en le matériau contenant du carbone est transformé au moins en partie en une texture de carbure de silicium et est ensuite infiltré avec le sol de précurseur.

15. Objet fabriqué d'après le procédé selon la revendication 1, ou fabriqué d'après le procédé selon la revendication 11.
